# EUROPÄISCHE PATENTSCHRIFT

(11) **EP 2 545 293 B1**
(45) Veröffentlichungstag und Bekanntmachung des Hinweises auf die Patenterteilung: **19.03.2014**
(21) Anmeldenummer: 11721703.4
(22) Anmeldetag: 18.05.2011
(51) Int. Cl.: F16C 23/04, B65G 17/38

(54) **GELENKLAGER UND VERFAHREN ZUR HERSTELLUNG EINES GELENKLAGERS**
PIVOT BEARING
PALIER D'ARTICULATION

(30) Priorität: 26.05.2010 CH 826102010
(43) Veröffentlichungstag der Anmeldung: 16.01.2013
(73) Patentinhaber: Müller Martini Holding AG, 6052 Hergiswil (CH)
(72) Erfinder: OPPLIGER, Jean-Claude, CH-8155 Niederhasli (CH); LANDOLT, Michael, CH-4665 Oftringen (CH)
(86) Internationale Anmeldenummer: PCT/CH2011/000115
(87) Internationale Veröffentlichungsnummer: WO 2011/147039

(56) Entgegenhaltungen:
- WO-A1-03/106851
- DE-U1-202005 005 829
- GB-A- 1 107 880
- US-A- 4 294 345
- US-A1- 2005 023 113

## Beschreibung

### Technisches Gebiet

Die vorliegende Erfindung betrifft ein Gelenklager gemäss Oberbegriff des Anspruchs 1. Sie betrifft auch ein Verfahren zur Herstellung eines solchen Gelenklagers gemäss Anspruch 9. Ferner betrifft die Erfindung die Verwendung des Gelenklagers im Zusammenhang mit der Bildung einer aus Kettengliedern bestehenden Förderkette.

### Stand der Technik

Gelenklager bilden eine wesentliche Komponente bei flexiblen Kopplungen von dynamisch arbeitenden Elementen. Als Beispiel hierzu soll die Kopplung von Kettengliedern genannt werden, welche zu einer Förderkette zusammengestellt werden. Insbesondere wenn solche Förderketten über ondulierte oder richtungswechselnde Bahnen geführt werden sollen, kommen diesen Gelenklagern eine wichtige betriebliche Bedeutung zu.

Aus EP 1 832 532 A2 ist eine Förderkette bekannt geworden, deren Kettenglieder über Gelenklager miteinander gekoppelt sind. Dieser Stand der Technik wird, soweit es sich um das Gelenklager handelt, dadurch spezifiziert, dass dieses Gelenklager aus einem kugelförmigen Lagerkörper besteht, der in Wirkverbindung mit einem Lagergehäuse steht.

Bei dieser Abgrenzung soll die aus dieser Druckschrift hervorgehende Lehre im Wesentlichen dadurch weitergebildet werden, dass das Lagergehäuse aus zwei Lagergehäuseteilen besteht, wobei jeder Lagergehäuseteil einen Teilflansch aufweist. Die Teilflansche der Lagergehäuseteile und die Lagerenden der Laschen sind mit Hilfe eines gemeinsamen Fixiermittels zusammengehalten, dergestalt, dass allein durch dieses Fixiermittel die Lagergehäuseteite den Lagerkörper fest umschliessen, und die Lagergehäuseteile in den Lagerenden der Laschen gegen Verdrehung und axiale Verschiebung gesichert befestigt und die Lagerenden der Laschen relativ zueinander fixiert sind.

Aus dieser Druckschrift geht des Weiteren hervor, dass es sich hier um ein zweiteiliges Lagergehäuse handelt, das den kugeligen Lagerköper umschliesst, und dass die beiden Lagergehäuseteile über sogenannte Fixiermittel kraftschlüssig zusammengebaut werden.

Ferner wird in dieser Druckschrift dargelegt, dass diese Fixiermittel im Bereich der Trennebene der beiden Lagergehäuseteile Bohrungen aufweisen, welche in Wirkverbindung mit entgegengesetzt gelagerten Stiften stehen, über welche die Zentrierung des kugeligen Lagerkörpers erstellt wird. Der kugelige Lagerkörper wird demnach durch zwei Lagergehäuseteile eingefangen, wobei diese dann gegenüber dem kugeligen Lagerkörper durch die genannten Zentrierungselemente ausgerichtet und dann kraftschlüssig verankert werden.

Bei einem solchen Einbau muss indessen dafür gesorgt werden, dass der kugelige Lagerkörper seine angestammte gelenkfähige Funktion erfüllen kann, womit insbesondere beim Zusammenbau eines solchen Gelenklagers geachtet werden muss, dass ein entsprechendes Lagerspiel sicher gestellt wird, soll die bestimmungsgemässe Anwendung dieses Gelenklagers gewährleistet sein.

Bei einem solcherart aufgebauten Gelenklager ist zu berücksichtigen, dass insbesondere bei der Herstellung der Lagergehäuseteile und bei deren ermittelten Zentrierung zueinander in Relation zum kugeligen Lagerkörper mit äusserst kleinen Toleranzen operiert werden muss, soll die Funktionalität des Gelenklagers bei jeder sich im Betrieb einstellenden Lage, insbesondere wenn diese Gelenklager bei Förderketten eingesetzt werden, gewährleistet bleiben.

Eine weitere nicht zu unterschätzende Genauigkeit bei der Herstellung des Gelenklagers betrifft die Bildung der beiden inneren Lagerschalenformen, welche exakt mit der kugeligen Form des Lagerkörpers korrespondieren müssen. Es bleibt bei einer solchen Konstruktion die Frage offen, welche Mittel hier das System dann zum Einstellen des Lagerspiels zur Verfügung stellen kann.

Aus GB 1,107,880 A1 ist ein Gelenklager bekannt geworden, welches im Wesentlichen auch aus einem Lagerkörper in Form einer sphärischen Teilkugel und einem Lagergehäuse besteht. Bei diesem Gelenklager wird eine vorgängige formmässige Anpassung des Lagergehäuses (outer ring blank 1) gegenüber dem inneren sphärischen Lagerkörper vorgenommen, um den Betriebsverhältnissen eines solchen Gelenklagers gerecht zu werden. Zu diesem Zweck wird diese Lagerschale einerseits mit dem Lagerkörper in Wirkverbindung gebracht, und sie andererseits durch einen äusseren Ring eingegrenzt, worin die Lagerschale dann radial eingefangen ist. Die Spieleinstellung zwischen Lagerschale und Lagerkörper wird dadurch erzielt, dass die Lagerschale, also der "outer ring blank" beidseitig axial komprimiert wird, bis der Abstand zwischen dem Umfang des Lagerkörpers und der Innenfläche des äusseren Ringes durch einen von der expandierenden Lagerschale ausgeübten Kraftschluss überbrückt ist.

Nach dieser ersten Operation wird das Gelenklager, d.h. Lagerschale und Lagerkörper, dann aus dem äusseren Ring entnommen, und in eine Vorrichtung mit einer grösseren Bohrung überführt, deren Grösse nun die betrieblich notwendigen Spiele zwischen Lagerschale und Lagerkörper zulässt.

Die Lagerschale soll dann durch mechanische Eingriffe so verändert werden, dass sie sich an die neue Bohrung einstellt. Das Material der Lagerschale soll gut deformierbar sein und gute Gleiteigenschaften aufweisen.

Das Lagerspiel zwischen Lagerkörper und Lagerschale wird gemäss Beschreibung so bewerkstelligt, dass in einer Aussparung der Lagerschale eine Deformation durch einen Keil ausgeübt wird, welche Deformation das Lagerspiel indiziert soll.

Aus dieser Druckschrift geht indessen nicht hervor, wie effektiv eine reproduzierbare streng umgrenzte Spielpassung zwischen Lagerkörper und Lagerschale erstellt werden kann. In dieser Druckschrift ist lediglich die Rede davon, dass durch Antreiben eines Keils innerhalb einer Aussparung in der Lagerschale offensichtlich jene Spielpassung erreicht werden soll, welche für den Betrieb des Gelenklagers zugrunde liegen muss. Welche bestimmungsgemässen Eckpunkte bzw. Grundlage hier bei der Erstellung dieser Spielpassung vorgesehen resp. angesteuert werden sollen, ist in dieser Druckschrift weder offenbart noch nahegelegt. Kommt hinzu, dass die Anwendung eines Keils zur Erstellung eines Spiels höchst problematisch ist. Darüber hinaus lässt die Druckschrift bei der Erstellung der Spielpassung Vieles im Unklaren, so dass dem Fachmann keine klare Lehre zum technischen Handeln vermittelt wird. Insbesondere geht auch aus der Druckschrift nicht hervor, wie die mechanischen äusseren Faktoren und die Imponderabilien während der Montage aufgefangen werden sollen.

### Darstellung der Erfindung

Hier will die Erfindung Abhilfe schaffen. Der Erfindung, wie sie aus den Ansprüchen gekennzeichnet ist, liegt die Aufgabe zugrunde, bei einem Gelenklager der eingangs genannten Art, das im Wesentlichen aus einem kugeligen (sphärischen) Lagerkörper und einer Lagerschale besteht, die Funktionalität sowohl bei der Herstellung als auch im Betrieb nachhaltig zu erhöhen.

Erfindungsgemäss bildet der sphärische Lagerkörper die eine Grundlage zur Bereitstellung eines einteiligen Gelenklagers. Die andere Grundlage wird dadurch gebildet, dass ebendieser Lagerkörper mittels eines Giessverfahrens im Wesentlich im Bereich seiner sphärischen Aussenfläche von einer Lagerschale umschlossen wird. Damit ist der sphärische Lagerkörper zunächst satt in dieser einteiligen Lagerschale eingefangen, wobei die axiale Abdeckung des Lagerkörpers durch die Lagerschale dafür sorgt, dass der sphärische Teil des Lagerkörpers auch in axialer Richtung formschlüssig eingefangen bleibt.

Bei dieser giesstechnischen Herstellung wird dann vorzugsweise vorgesehen, dass die Lagerschale entlang ihrer radialen Ausdehnung einen durchgehenden Schlitz durch die Wanddicke erhält, der dann später für die sichere Einstellung eines zugeordneten Lagerspiels zwischen dem sphärischen Lagerkörper und der umliegenden Lagerschale dient, allenfalls herangezogen werden kann.

Der wesentliche Vorteil ist somit darin zu sehen, dass die Lagerschale, trotz des genannten durchgehenden Schlitzes, ihre einteilige Natur nicht verliert, sonach als einteilig gilt, so dass weitere kraftschlüssige Elemente zur Bildung einer zusammengesetzten Lagerschale nicht vorgesehenen werden müssen.

Ein weiterer wesentlicher Vorteil betrifft die Einstellung des Lagerspiels zwischen dem sphärischen Lagerkörper und der umspannenden einteiligen Lagerschale.

Soll bei speziellen operativen Einsätzen des Gelenklagers die gezielte Einstellung eines Lagerspiels betriebsnotwendig sein, so wird der Giessvorgang so ausgelegt, dass zwischen Lagerkörper und Lagerschale eine kraftschlüssige Passung resultiert. Danach wird auf den Schlitz in der Lagerschale zurückgegriffen, indem ein masslich eng definiertes Einschiebeelement in den Schlitz eingeschoben wird, der eine fixe lagerspielabhängige Spreizung der Lagerschale im Bereich des Schlitzes bewirkt. Zugleich bewirkt das Einschiebeelement auch eine körperliche integrale Überbrückung des Schlitzes, womit das Gelenklager eine äussere definierte Kontur aufweist.

Ein weiterer wesentlicher Vorteil der Erfindung ist darin zu sehen, dass das erfindungsgemässe Gelenklager eine Optimierung der Materialien zwischen dem sphärischen Lagerkörper und der umliegenden Lagerschale ermöglicht, eingedenk der Tatsache, dass nachträgliche Bearbeitungen der Elemente eines solchen Gelenklagers völlig entfallen.

Ferner wird auf die vorteilhafte Möglichkeit des erfindungsgemässen Gelenklagers hingewiesen, wonach sich bei extremen Betriebsbedingungen auch eine gezielte individuelle Einstellung des Lagerspiels zwischen Lagerkörper und Lagerschale vornehmen lässt, indem durch den bereits genannten Schlitz entsprechend dimensionierte Einschiebeelemente eingeschoben werden können, dergestalt, dass die Spreizung der Lagerschale und damit die Lagerspielsicherung des sphärischen Lagerkörpers allenfalls auch situativ vorgenommen werden kann.

Diese Einschiebeelemente können radial oder auch axial in den Schlitz eingeschoben werden. Das Einschiebeelement weist auf alle Fälle eine Form auf, welche sich leicht in eine korrespondierende Gegenform der Lagerschale im Bereich des Schlitzes einschieben lässt, dergestalt, dass dies zu einer Form- und Kraftschlüssigkeit der beiden Teile führt, welche die Einteiligkeit der Lagerschale zusätzlich sicherstellt.

Damit ist auch gewährleistet, dass ausschliesslich ein einziges Lagerspiel entstehen kann, welches nur eine vorbestimmte Spielpassung aufweist. Dabei sind diese Einschiebeteile formmässig so beschaffen, dass sie weder die sphärische innere Fläche der Lagerschale noch den Lagerkörper selbst tangieren. Ferner lässt sich vorsehen, dass das Einschiebeelement auch aus zwei kongruenten Teilen besteht, welche in den Schlitz gegengleich eingeschoben werden können, was insbesondere bei einer axialen gegengleiche Einschiebung derselben zu einer qualitätssichernde Formbeständigkeit der Lagerschale führt.

Das Einschiebelement weist demnach eine unterseitige schmale Lippe auf, welche für den Schlitz der Lagerschale bestimmt ist, und eine oberseitige Verbreiterung, deren Form der im oberen Teil der Lagerschale vorgesehenen Gegenform entspricht. Sonach ist die geometrische Form des Einschiebeelementes vorzugsweise so gestaltet, dass dieses Element oberseitig aus einer in etwa halbrunden bis runden bolzenartigen Form besteht und unterseitig eine im Wesentlichen rechteckige Lippe, entsprechend der Breite des Schlitzes in der Lagerschale, aufweist. Der Oberteil des Einschiebeelementes kann ohne Weiteres eine andere geometrische Form aufweisen, also statt rund in etwa trapezförmig ausgebildet sein. Selbstverständlich muss dann die jeweilige Gegenform in der Lagerschale entsprechend ausgebildet sein.

Vorteilhafte und zweckmässige Weiterbildungen der erfindungsgemässen Aufgabenlösung sind in den weiteren Ansprüchen gekennzeichnet.

In folgenden wird anhand der Zeichnungen ein Ausführungsbeispiel der Erfindung näher erläutert. Alle für das unmittelbare Verständnis der Erfindung unwesentlichen Merkmale sind fortgelassen worden. Gleiche Elemente sind in den verschiedenen Figuren mit den gleichen Bezugszeichen versehen.

### Kurze Beschreibung der Figuren

Es zeigt:
- Fig. 1: ein Gelenklager bestehend aus einem sphärischen Lagerkörper und einer Lagerschale,
- Fig. 2: das das Gelenklager gemäss Figur 1 im eingebauten Zustand,
- Fig. 3a-d: verschiedene Ansichten des Gelenklagers
- Fig. 4: ein Gelenklager, ohne eingebautes Einschiebeelement,
- Fig. 5: ein Gelenklager mit eingebautem Einschiebeelement,
- Fig. 6: ein Einschiebeelement in einer dreidimensionalen Darstellung,
- Fig. 7: eine dreidimensionale Darstellung des Gelenklagers vor der Montage von spiegelbildlich zueinander einschiebbaren Einschiebeelementen und
- Fig. 8: eine dreidimensionale Darstellung des mit den Einschiebeelementen vervollständigten Gelenklagers.

### Wege zur Ausführung der Erfindung, gewerbliche Verwendbarkeit

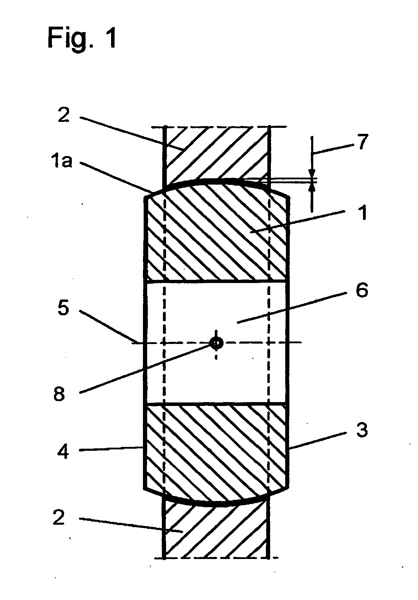

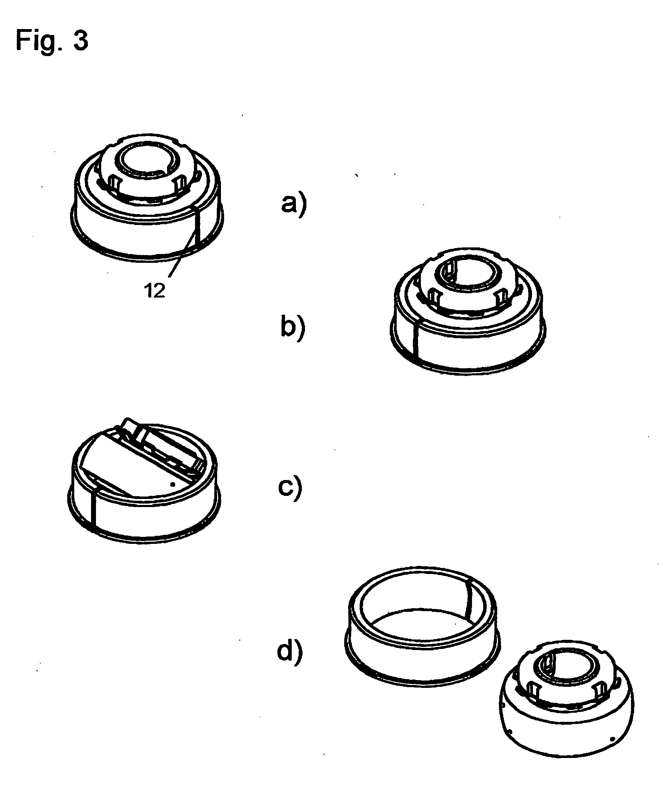

Eine gelenkige Verbindung zwischen zwei Kettengliedern einer Förderkette wird im Allgemeinen durch ein Gelenklager hergestellt, wie es schematisch aus Fig. 1 hervorgeht (Siehe auch die Fig. 3a-d). Das hier dargestellte Gelenklager, das bisweilen auch Kugelgelenklager genannt wird, besteht im Wesentlichen aus einem sphärischen Lagerkörper 1 und einem Kugelschalensegment 2 (kurz auch Lagerschale genannt), wobei die beiden Elemente 1, 2 in strikter Wirkverbindung zueinander stehen. Der sphärische Lagerkörper 1 weist demnach eine kugelige Teiloberfläche 1a auf, welche sich über die ganze Breite des Lagerkörpers 1 erstreckt. Dieser Lagerkörper 1 weist eine durchgehende Bohrung 6 auf, welche der Kopplung von hier nicht näher gezeigten Elementen dient, welche sich dann, entsprechend dem sphärischen Freiheitsgrad des Lagerkörpers 1, gelenkig verhalten. Der Lagerkörper 1 ist zwischen zwei gegenüberliegenden Stirnseiten 3, 4 axial begrenzt, wobei diese Stirnseiten 3, 4 rechtwinklig oder quasi-rechtwinklig zur Achse 5 des Lagerkörpers 1 stehen. Das Lagerspiel 7 ist in der Figur 1 stark überdimensioniert gezeigt. In der Praxis wird sich dieses Lagerspiel innerhalb der Toleranzgrenzen eines Schiebesitzes bewegen. Die eingebauten gelenkigen Elemente üben im Betrieb auf die Lagerschale 2 radiale oder quasi-radiale Kräfte aus, welche im Idealfall auf den geometrischen Mittelpunkt 8 des sphärischen Lagerkörpers 1 ausgerichtet sind. An sich ist dann zu berücksichtigen, dass das Lagerspiel 7 durch die Intensität dieser Kräfte Verformungen erfahren kann, so dass die originäre Vorgabe oder Einstellung dieses Lagerspiels 7 entsprechend berücksichtigt werden muss.

Eine wesentliche Grundlage bei der Bestimmung des Lagerspiels 7 bilden die Materialien des Lagerkörpers 1 und der Lagerschale 2. Nach heutigen Erkenntnissen lassen sich Kunststoffmaterialien vorsehen, welche eine gewisse Elastizität gegen die durch die Intensität der im Betrieb auftretenden Kräfte hervorgerufene Verformung gewährleisten, ohne deswegen auf geringe Gleitreibungskoeffizienten verzichten zu müssen. Der Lagerkörper 1 kann durch verschiedene giesstechnische Herstellungsverfahren mit der Lagerschale 2 umgossen werden, beispielsweise lässt sich dies durch ein Druckgussverfahren bewerkstelligen.

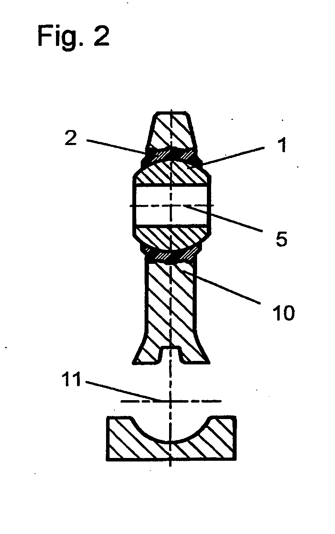

Fig. 2 zeigt das Kugelgelenklager im eingebauten Zustand. Bei dieser Darstellung durchsetzen Lagerkörper 1 und Lagerschale 2 den Einsteckbereich 10. Der Einsteckbereich 10 wird über den Lagerkörper 1 drehbar auf der Lagerschale 2 gelagert, so dass ein erstes Kettenglied einer Förderkette mit dem Einsteckbereich 10 betreffend den Aufnahmebereich 11 eines zweiten Kettengliedes hinsichtlich der Achse 5 schwenkbar gelagert ist. An sich ist bei einer solchen Konstruktion auch eine sphärische pendelnde Bewegung des Einsteckbereichs 10 gegenüber dem Lagerkörper 1 auch möglich, insbesondere wirkt sich dies dann als vorteilhaft aus, wenn Kräfte weiterer Elemente auf den Lagerkörper 1 wirken, welche ausserhalb der Achse 5 greifen. Das Verhalten einer solchen pendelnden Bewegung im Verhältnis zu Lagerkörper und Lagerschale geht beispielsweise aus Fig. 3c hervor.

Fig. 3a-c zeigen in verschiedenen Ansichten das eingebaute Kugelgefenklager. Insbesondere aus Fig. 3c ist die kugelförmige Ausbildung des Lagerkörpers 1 und desssen sphärische Verschwenkbarkeit gegenüber der Lagerschale 2 ersichtlich. Diese Verschwenkbarkeit lässt die oben bereits beschriebene pendelnde Bewegung zu. In sämtlichen Fig. 3a-d lässt sich die geschlitzte Lagerschale 12 gut erkennen. Der Schlitz 12 weist vorzugsweise oberseitig eine intermediäre runde Einsteckform auf, in welche das nicht näher gezeigte gegengeformte Einsteckelement seitlich eingeschoben werden kann, womit eine streng definierte Spreizung der Lagerschale 2 erreicht wird. Ist einmal das Einsteckelement eingeschoben, so entsteht hiermit eine kraft- und formschlüssige Verbindung gegenüber der Lagerschale 2. Zur Vermeidung unnötiger Wiederholungen wird betreffend Einschiebeelemente auf die Ausführungen im drittletzten Absatz unter dem Kapitel "Darstellung der Erfindung" verwiesen. Des Weiteren sind in Fig. 3d Lagerkörper und Lagerschale in einem nicht eingebauten Zustand ersichtlich.

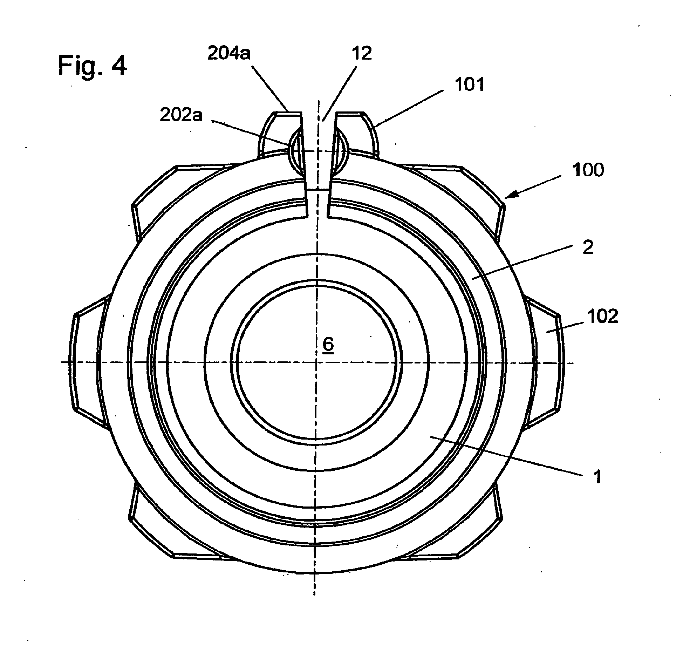

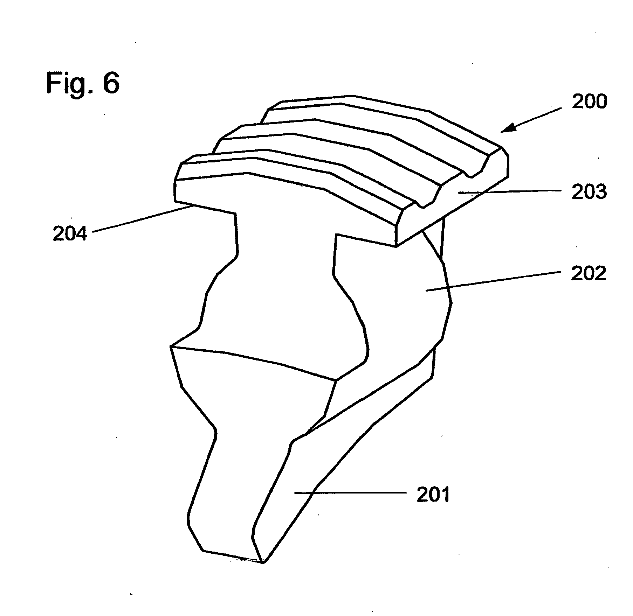

Fig. 4 zeigt eine detaillierte Ansicht von Fig. 3a. Es handelt sich hier also um einen eingebauten Zustand zwischen Lagerkörper 1 und Lagerschale 2. Das Kugelgelenklager 100 weist auf den Umfang verteilt eine Anzahl von hervorstehenden Rippen 102 auf, welche die Verankerung im eingebauten Zustand gemäss Fig. 2 bilden. Des Weiteren weist die Lagerschale 2 eine radial hervorstehende Nase 101 mit einer oberseitigen Abschlussfläche 204a auf, worin sich der radiale durch die Wanddicke durchgehende Schlitz 12 befindet. Dieser radiale Schlitz 12 verläuft leicht konisch von oben nach unten und weist darüber hinaus eine im Querschnitt weitgehend runde Ausbuchtung 202a auf. Die Ausbuchtung wird vorzugsweise durch die ganze Breite der Lagerschale 2 geführt. Selbstverständlich muss diese Ausbuchtung 202a nicht notwendigerweise die hier gezeigte rundförmige Kontur aufweisen. Andere geometrische Konturen sind auch möglich. Da sie bestimmungsgemäss mit der Teilform des Einschiebeelementes (Siehe Fig. 6) geometrisch korrespondieren müssen, wird man eine einschiebeleichte Kontur wählen, wie dies in der Fig. 4 vorgeschlagen wird. Die oberseitige Abschlussfläche 204a dient dem Abschluss mit der Gegenfläche des Einschiebeelementes im eingebauten Zustand. Hierzu wird auf die Fig. 6-8 verwiesen.

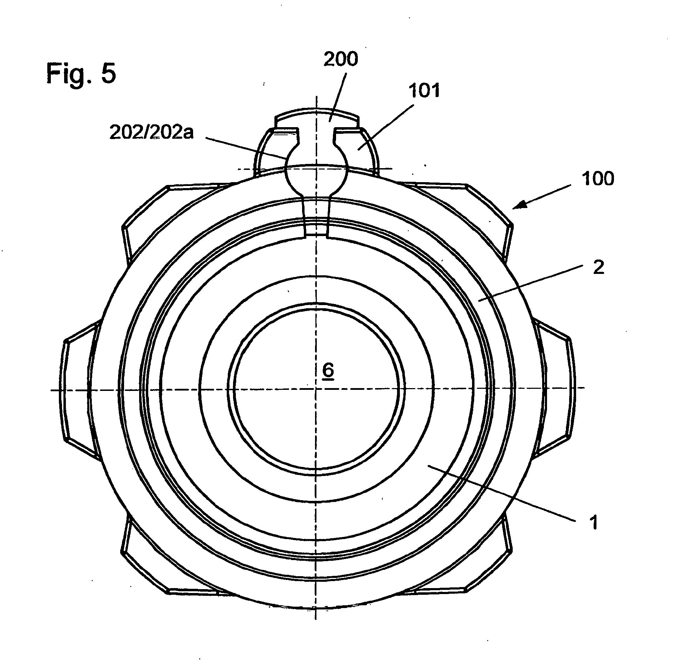

Aus Fig. 5 geht nun das einsatzbereite Kugelgelenklager 100 hervor, worin nun das Einschiebelement 200 angebracht worden ist. Aus dieser Fig. 5 geht sonach die Interdependenz zwischen den Querschnittsformen des Schlitzes 12 gegenüber der Aussenform des Einschiebeelementes hervor. Der Kraftschluss wird hier durch das anfängliche Untermass der kreisförmigen Ausbuchtung 202 des Schlitzes 12 gegenüber der korrespondierenden Aussenform 202 des Einschiebeelementes 200 gebildet. Dreidimensinsional betrachtet bildet diese kreisförmige Ausbuchtung 202 eine bolzenförmige Rundform. Das Übermass der korrespondierenden Aussenform 202 des Einschiebeelementes 200 sorgt dafür, dass dieses im eingebauten Zustand im Schlitz 12 eine minimale Spreizung der Lagerschale verursacht, welche sich auf den anfänglichen Kraftschluss des Lagerkörpers 1 auswirkt, dergestalt, dass die Spielpassung gegenüber der Lagerschale 2 die Folge ist.

Diese durch Spreizung realisierte Spielpassung lässt sich aufgrund des Herstellungsverfahrens des Kugelgelenklagers sehr genau im Voraus bestimmen, und gilt im gleichen Masse für eine ganze Fertigung von Kugelgelenklagem. Der restliche Querschnittsverlauf zwischen Schlitz 12 und Einschiebeelement 200 oberhalb und unterhalb der kraftschlüssigen Konturen weisen Schiebtoleranzen auf, und dienen hauptsächlich der Abdichtung des Lagerkörpers 1 gegen Verschmutzung.

Fig. 6 zeigt das Einschiebelement 200 in einer dreidimensionalen Darstellung. Die äussere Form des Einschiebeelementes bestimmt sich nach dem Querschnitt des Schlitzes gemäss Fig. 4 und 5. Das Einschiebeelement 200 weist unterseitig eine schmale im Wesentlichen rechteckige Lippe 201 auf, welche für den unterseitigen lagerkörperseitigen Schlitz 12 der Lagerschale 2 als Abschluss gegenüber dem Lagerkörper 1 bestimmt ist. Oberseitig weist das Einschiebeelement 200 eine Verbreiterung 203 auf, deren Unterseite 204 die Gegenfläche zu der oberseitigen Abschlussfläche 204a der hervorstehenden Nase 101 (Siehe Fig. 4 und 5) bildet. Des Weiteren ist hier die rundförmige Kontur der Teilform 202 des Einschiebeelementes 200 ersichtlich, welche der Gegenform 202a im Schlitz 12 entspricht (Siehe Fig. 5). Oberseitig weist die Verbreiterung 203 noch eine geriffelte Oberfläche auf, welche einem erleichterten Ein- und Ausbauen des Einschiebeelementes 200 dient. Sonach ist die geometrische Aussenform des Einschiebeelementes 200 vorzugsweise so aufgebaut, dass sie einerseits satt mit der Querschnittsform des Schlitzes entlang der ganzen Wanddicke der Lagerschale 2 korrespondiert, mit der Massgabe, dass die rundförmige Teilform 202 durch ihr Übermass gegenüber der Ausbuchtung 202a des Schlitzes 12 bei der Montage des Einschiebeelementes 200 eine minimale Spreizung der Lagerschale 2 bewirkt, welche Spreizung ursächlich für die Spielpassung zwischen Lagerkörper 1 und Lagerschale 2 verantwortlich ist. Selbstverständlich lassen sich auch andere Querschnittsformen des Schlitzes 12 vorsehen, wobei wesentlich bleibt die Gewährleistung kongruenter Konturen des Schlitzes 12 gegenüber der Aussenform des Einschiebeelementes 200. Dies gilt streng geometrisch bis auf jene Passformen, welche für die Spielpassung zwischen Lagerkörper und Lagerschale zugrunde gelegt wird. Hier wird, wie oben bereits detailliert behandelt, ein Massunterschied im Ruhzustand der Lagerschale 2 gegenüber dem Einschiebeelement 200 vorgesehen.

Das Giessverfahren bei der Herstellung der Lagerschale 2 unter Einbezug des Lagerkörpers 1 schafft zunächst zwischen den beiden Teilen ein starres Gebilde, das erst durch den Einsatz des Einschiebeelementes 200 zum Erzielen der Spielpassung entkoppelt wird, wobei die Reproduzierbarkeit des Giessverfahrens gewährleistet ist, d.h., dass die massliche Dimensionierung der Aussenform des Einschiebeelementes 200 gleich bleibt. Die Erfindung zeichnet sich aber auch dadurch aus, dass die Spielpassung durch entsprechende Dimensionierung der Aussenform der Einschiebeelemente flexibel gestaltet werden kann.

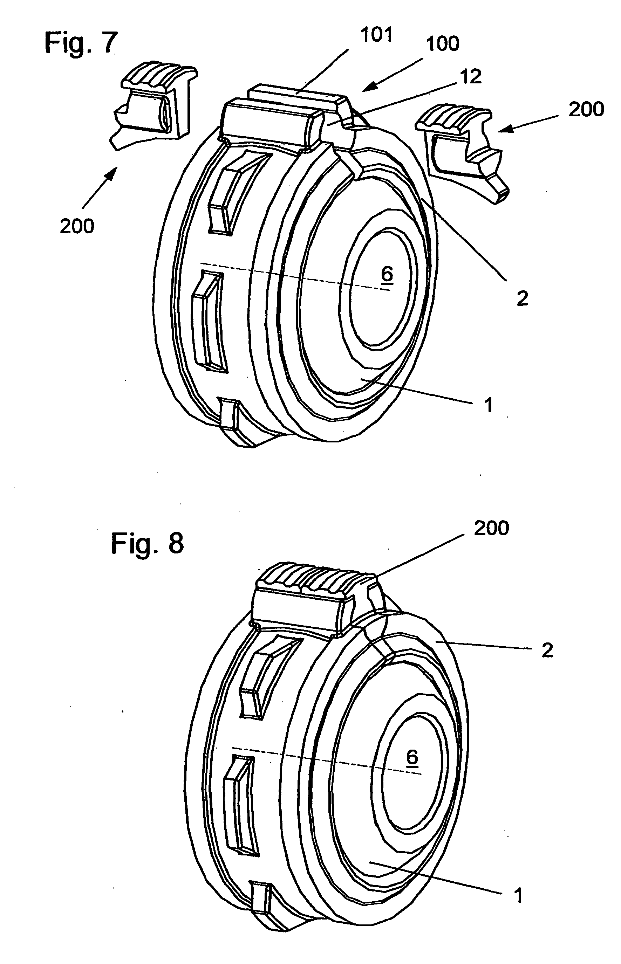

Fig. 7 zeigt das Kugelgelenklager 100 in einer dreidimensionalen Darstellung, welche auf die Einschiebeoperationen des Einschiebeelementes 200 hinweist. Vorliegend werden zwei gleiche Einschiebeelemente vorgesehen, welche gegengleich in den Schlitz 12 eingeschoben werden. Besonders gut ersichtlich ist die bolzenförmige Passform sowie die unterseitige Form der rechteckigen Lippe des Einschiebeelementes 200, wobei die unterseitige Form der sphärischen Oberfläche des Lagerkörpers 1 entspricht.

Schliesslich wird auf Fig. 8 das zusammengebaute Kugelgelenklager dargestellt.

## Patentansprüche

1. Gelenklager, im Wesentlichen bestehend aus einem kugeligen Lagerkörper (1) und einer Lagerschale (2), wobei die Lagerschale mindestens teilweise den Lagerkörper umschliesst, wobei zwischen Lagerkörper und Lagerschale durch Mittel und/oder Vorkehrungen eine Spielpassung erstellbar ist, weiche Spielpassung einen gelenkigen Freiheitsgrad des Gelenklagers zulässt, **dadurch gekennzeichnet, dass** die einteilige Lagerschale (2) einen auf die Wanddicke der Lagerschale bezogenen radialen Schlitz (12) mit mindestens einer konturierten Ausbuchtung (202a) aufweist, dass das Mittel zur Erstellung der Spielpassung zwischen Lagerkörper und Lagerschale aus mindestens einem Einschiebeelement (200) besteht, welches eine mit der Ausbuchtung (202a) korrespondierende Teilform (202) aufweist, dass die Teilform (202) des Einschiebeelementes (200) gegenüber der Ausbuchtung (202a) des Schlitzes (12) ein definiertes Übermass aufweist, welches eine predeterminierte Spielpassung zwischen Lagerkörper und Lagerschale indiziert.

2. Gelenklager nach Anspruch 1, **dadurch gekennzeichnet, dass** der Lagerkörper (1) eine kugelförmige Aussenform aufweist.

3. Gelenklager nach Anspruch 1, **dadurch gekennzeichnet, dass** die Ausbuchtung (202a) des in der Lagerschale (2) durchgehenden radialen Schlitzes (12) eine rundartige Kontur aufweist, welche in radialer Richtung intermediär zwischen Aussenfläche und Innenfläche der Lagerschale (2) angeordnet ist.

4. Gelenklager nach einem der Ansprüche 1 oder 2, **dadurch gekennzeichnet, dass** das Einschiebeelement (200) eine Aussenform aufweist, welche formschlüssig mit dem Querschnitt des Schlitzes (12) ist.

5. Gelenklager nach einem der Ansprüche 1-4, **dadurch gekennzeichnet, dass** der Lagerkörper (1) innerhalb der Lagerschale (2) einen formschlüssigen sphärisch-konformen Freiheitsgrad aufweist.

6. Gelenklager nach den Ansprüchen 1 und 6, **dadurch gekennzeichnet, dass** der Lagerkörper (1) gegenüber der Achse des Lagergehäuses eine pendelnde Bewegung im Rahmen des sphärischen Freiheitsgrads ausführt.

7. Gelenklager nach einem der Ansprüche 1-6, **dadurch gekennzeichnet, dass** der Querschnitt des Schlitzes in der Lagerschale in Wirkverbindung mit der Aussenform des Einschiebeelementes steht, das eine lagersplelabhängige Fixierung der Lagerschale gegenüber dem Lagerkörper bewerkstelligt, dass das Einschiebelement radial oder axial in den Schlitz einschiebbar ist, und dass das Einschiebeelement mindestens aus einem Teil besteht.

8. Gelenklager nach einem der Ansprüche 1-7, **dadurch gekennzeichnet, dass** die durch das montierte Einschlebeelement bedingte Fixierung der Lagerschale mindestens einen Formschluss zwischen Lagerkörper und Lagerschale erstellt, und dass der Formschluss eine maximale Spielpassung zwischen Lagerkörper und Lagerschale erstellt.

9. Verfahren zur Herstellung eines Gelenklagers, welches im Wesentlichen aus einer Lagerschale (2) für die Aufnahme eines Lagerkörpers (1) besteht, wobei der Lagerkörper in einem Giessverfahren mit einer einteiligen Lagerschale umgossen wird, dergestalt, dass zwischen Lagerkörper und Lagerschale eine formschlüssige Verbindung entsteht, dass der Lagerkörper (1) gegenüber der Lagerschale (2) so umgossen wird, dass die formschlüssige Verbindung mit einem Kraftschluss hergestellt wird, wobei die Spielpassung zwischen Lagerkörper (1) und Lagerschale (2) durch eine nachgängige Operation hergestellt wird, indem die Einbringung eines auf die Lagerschale (2) wirkenden Elementes (200) vorgenommen wird.

10. Verfahren nach Anspruch 9, **dadurch gekennzeichnet, dass** die Lagerschale in demselben Giessverfahren gleichzeitig in radialer Richtung mit einem auf die Wandstärke der Lagerschale bezogenen durchgehenden geformten Schlitz hergestellt wird, und dass die Formgebung mindestens eines Teils dieses Schlitzes in Übereinstimmung mit mindestens einer Teilform des eingebrachten Elementes hergestellt wird.

11. Verwendung des Gelenklagers nach einem der Ansprüche 1-8, **dadurch gekennzeichnet, dass** das Gelenklager bei der Bildung einer Förderkette zum Einsatz kommt, wobei das Gelenklager die Verbindung von subsequent angeordneten Kettengliedern herstellt, und wobei je zwei benachbarte Kettenglieder über das Gelenklager sich allseitig gelenkig verhalten.

## Claims

1. A spherical plain bearing essentially consisting of a spherical bearing body (1) and a bearing shell (2), in which case the bearing shell at least partly encloses the bearing body and a clearance fit can be established between bearing body and bearing shell by devices and/or arrangements, said clearance fit allowing a degree of freedom of swivel of the spherical bearing, **characterized in that** the one-piece bearing shell (2) has a radial slot (12), corresponding to the wall thickness of the bearing shell, which has at least one contoured bulge (202a), **in that** the means for establishing the clearance fit between bearing body and bearing shell consists of at least one push-in element (200) which has a shape (202) corresponding to the bulge (202a), and **in that** the shape (202) of the push-in element (200) has a specific overdimension compared with the bulge (202a) of the slot (12), which produces a predetermined clearance fit between bearing body and bearing shell.

2. A spherical plain bearing according to Claim 1, **characterized in that** the bearing body (1) has a spherical outer form.

3. A spherical plain bearing according to Claim 1, **characterized in that** the bulge (202a) of the radial slot (12) extending through the bearing shell (2) has a roundish contour located in radial direction intermediately between outer face and inner face of the bearing shell (2).

4. A spherical plain bearing according to one of Claims 1 or 2, **characterized in that** the push-in element (200) has an outer form which interlocks with the cross-section of the slot (12).

5. A spherical plain bearing according to one of Claims 1 to 4, **characterized in that**, within the bearing shell (2), the bearing body (1) has a form-locking spherical conformal degree of freedom.

6. A spherical plain bearing according to Claims 1 and 5, **characterized in that** the bearing body (1) executes a swinging movement relative to the axis of the bearing housing within the scope of the spherical degree of freedom.

7. A spherical plain bearing according to one of Claims 1 to 6, **characterized in that** the cross-section of the slot in the bearing shell is in working contact with the outer shape of the push-in element, which results in fixing of the bearing shell relative to the bearing body subject to the bearing clearance, **in that** the push-in element can be inserted into the slot in radial or axial direction, and **in that** the push-in element is made up of at least one part.

8. A spherical plain bearing according to one of Claims 1 to 7, **characterized in that** the fixing of the bearing shell achieved by the inserted push-in element establishes at least one form-locking closure between bearing body and bearing shell, and **in that** the form-locking closure establishes a maximum clearance fit between bearing body and bearing shell.

9. A method of manufacturing a spherical plain bearing, which essentially consists of a bearing shell (2) for receiving a bearing body (1), in which case, in a casting process, the bearing body is cast integral with a one-piece bearing shell in such a way that a form-locking connection is established between bearing body and bearing shell, and the bearing body (1) is cast relative to the bearing shell (2) so that the form-locking connection is formed by means of a non-positive connection, the clearance fit between bearing body (1) and bearing shell (2) being established in a subsequent operation by the insertion of an element (200) which acts on the bearing shell (2).

10. A method according to Claim 9, **characterized in that**, in the same casting process, the bearing shell is at the same time produced with a continuous slot formed in radial direction relative to the wall thickness of the bearing shell, and **in that** at least a part of this slot is shaped so as to conform with at least part of the shape of the push-in element.

11. Use of the spherical plain bearing according to one of Claims 1 to 8, **characterized in that** the spherical bearing is used in the construction of a conveyor chain, the spherical bearing forming a connection between adjacent chain links, and every two adjacent chain links having an all-round flexible action as a result of the spherical bearing.

## Revendications

1. Palier d'articulation, constitué pour l'essentiel d'un corps de palier sphérique (1) et d'un coussinet (2), sachant que le coussinet entoure au moins en partie le corps de palier, sachant qu'on peut, par des moyens et/ou en prenant des dispositions, créer entre le corps de palier et le coussinet un ajustement avec jeu qui autorise un degré de liberté d'articulation du palier d'articulation, **caractérisé en ce que** le coussinet en une pièce (2) présente une fente (12), radiale par rapport à l'épaisseur de paroi du coussinet et dotée d'au moins un renflement profilé (202a), **en ce que** le moyen pour créer l'ajustement avec jeu entre le corps de palier et le coussinet est constitué d'au moins un élément à insérer (200) qui présente une forme partielle (202) correspondant au renflement (202a), et **en ce que** la forme partielle (202) de l'élément à insérer (200) présente une surcote définie par rapport au renflement (202a) de la fente (12), surcote qui induit un ajustement avec jeu prédéterminé entre le corps de palier et le coussinet.

2. Palier d'articulation selon la revendication 1, **caractérisé en ce que** le corps de palier (1) présente une forme extérieure sphérique.

3. Palier d'articulation selon la revendication 1, **caractérisé en ce que** le renflement (202a) de la fente radiale (12) traversant le coussinet (2) présente un contour arrondi qui est disposé, en direction radiale, intermédiairement entre la face extérieure et la face intérieure du coussinet (2).

4. Palier d'articulation selon la revendication 1 ou 2, **caractérisé en ce que** l'élément à insérer (200) présente une forme extérieure qui est complémentaire de la forme de section de la fente (12).

5. Palier d'articulation selon l'une des revendications 1 à 4, **caractérisé en ce que** le corps de palier (1) présente à l'intérieur du coussinet (2) un degré de liberté d'engagement positif sphériquement conforme.

6. Palier d'articulation selon les revendications 1 et 5, **caractérisé en ce que** le corps de palier (1) accomplit, dans le cadre du degré de liberté spécifique, un mouvement pendulaire par rapport à l'axe du logement de palier.

7. Palier d'articulation selon l'une des revendications 1 à 6, **caractérisé en ce que** la section de la fente dans le coussinet se trouve en liaison fonctionnelle avec la forme extérieure de l'élément à insérer, lequel réalise une fixation en position, fonction du jeu de palier, du coussinet par rapport au corps de palier, **en ce que** l'élément à insérer peut être inséré radialement ou axialement dans la fente, et **en ce que** l'élément à insérer est réalisé en au moins une partie.

8. Palier d'articulation selon l'une des revendications 1 à 7, **caractérisé en ce que** la fixation en position du coussinet, causée par l'élément à insérer monté, crée au moins un engagement positif entre le corps de palier et le coussinet, et **en ce que** l'engagement positif crée un ajustement avec jeu maximal entre le corps de palier et le coussinet.

9. Procédé de fabrication d'un palier d'articulation qui est constitué pour l'essentiel d'un coussinet (2) destiné à recevoir un corps de palier (1), sachant que le corps de palier est, par un procédé de moulage, entouré d'un coussinet d'une seule pièce de telle sorte qu'une liaison positive est formée entre le corps de palier et le coussinet, sachant que le corps de palier (1) est entouré du coussinet (2) de telle sorte que la liaison positive est réalisée avec une liaison par friction, et sachant que l'ajustement avec jeu entre le corps de palier (1) et le coussinet (2) est réalisée par une opération consécutive par le fait qu'on entreprend l'introduction d'un élément (200) agissant sur le coussinet (2).

10. Procédé selon la revendication 9, **caractérisé en ce que** le coussinet est, au cours du même procédé de moulage, simultanément réalisé avec, en position radiale, une fente façonnée continue relativement à l'épaisseur de paroi du coussinet, et **en ce que** le façonnage d'au moins une partie de cette fente est réalisé en correspondance avec au moins une forme partielle de l'élément a insérer.

11. Utilisation du palier d'articulation selon l'une des revendications 1 à 8, **caractérisée en ce que** le palier d'articulation est utilisé pour la formation d'une chaîne transporteuse, sachant que le palier d'articulation réalise la liaison d'éléments de chaîne disposés de manière consécutive, et sachant que deux éléments de chaîne voisins se comportent chaque fois, au moyen du palier d'articulation, de manière articulée de tous côtés.
